# EUROPEAN PATENT APPLICATION

(11) **EP 4 576 282 A1**
(43) Date of publication of application: **25.06.2025**
(21) Application number: 23217831.9
(22) Date of filing: 19.12.2023
(51) Int. Cl.: H01M 8/04029, H01M 8/04044

(54) **COOLANT DE-GAS DEVICE AND FUEL CELL STACK**

(71) Applicant: AVL List GmbH, 8020 Graz (AT); AVL Fuel Cell Canada Inc., Burnaby, BC V5A 4W2 (CA)
(72) Inventor: Mann, Bhagwant Tejpaul, Burnaby, 5980 (CA)
(74) Representative: Gamper, Bettina

(57) **Abstract**

The invention is related to a coolant de-gas device (10) for de-gassing a coolant. The coolant de-gas device (10) comprises a coolant de-gas fitting (20) having a coolant de-gas fitting channel (22) for de-gassing a coolant, a load plate (30) for holding the coolant de-gas fitting (20), and a first isolator plate (40) for electrical isolating against a fuel cell stack body (50), wherein the first isolator plate (40) and the load plate (30) are mechanically connected to each other, and wherein the first isolator plate (40) comprises a first isolator plate channel (42) for directing the coolant from a cooling circuit of the fuel cell stack body (50) to the coolant de-gas fitting channel (22).

## Description

The present invention is related to a coolant de-gas device for de-gassing a coolant and a fuel cell stack comprising such a coolant de-gas device.

It is known that de-gassing of a coolant is important in a cooling circuit of a fuel cell stack to ensure a high heat transfer to the coolant. In a typical fuel cell stack that requires de-airing, a separate tube has to be inserted post-assembly from the fluid port adapter side and up to the top of the coolant header to siphon off the gas bubbles and provide a de-airing chamber. Typically, a de-airing passage which is perpendicular to the stacking direction of the fuel cells and which emerges from the side of the isolator plate is used. Such a de-airing connection at the side of the isolator plate is vulnerable to mechanical damage.

It is an object of the present invention to overcome the disadvantages described above at least partly. In particular it is an object of the present invention to provide a coolant de-gas device which limits external mechanical forces from being transferred into the isolator plate of the coolant de-gas device, and which allows a large inclination operating angle of the fuel cell stack. Furthermore, it is an object to provide a coolant de-gas device which can provide high electrical isolation.

The aforementioned problems are solved by a coolant de-gas device with the features of claim 1 as well as a fuel cell stack with the features of claim 13. Further features and details of the invention result from the subclaims, the description and the drawings. Features and details described in connection with the coolant de-gas device according to the invention naturally also apply in connection with the fuel cell stack according to the invention, and vice versa, so that reference is or can always be made mutually with regard to the disclosure concerning the individual aspects of the invention.

According to the present invention a coolant de-gas device for de-gassing a coolant is provided. The coolant de-gas device comprises a coolant de-gas fitting having a coolant de-gas fitting channel for de-gassing a coolant, a load plate for holding the coolant de-gas fitting, and a first isolator plate for electrical isolating against a fuel cell stack body, wherein the first isolator plate and the load plate are mechanically connected to each other, and wherein the first isolator plate comprises a first isolator plate channel for directing the coolant from a cooling circuit of the fuel cell stack body to the coolant de-gas fitting channel.

As described the first isolator plate and the load plate are mechanically connected to each other and the load plate holds the coolant de-gas fitting. Therefore, a mechanical force applied to the coolant de-gas fitting is not directly applied to the first isolator plate. The mechanical force applied to the coolant de-gas fitting is transferred to the load plate first. Then the mechanical force is translated from the load plate to the first isolator plate. Thus, external mechanical forces are limited from being transferred into the first isolator plate on a small spot.

If a load is applied to the coolant de-gas fitting the delicate first isolator plate is protected because the forces directly transfer to the mated load plate. One of the advantages of this invention is to not have forces translate to the first isolator plate. The load plate supports the coolant de-gas fitting mechanically while allowing the coolant de-gas fitting to be sealed against the first isolator plate and not have the first isolator plate provide mechanical support.

Because coolant and hydrogen are flowing inside the first isolator plate, it is critical that the design of the coolant de-gas device prevents any stress cracking or damage to the first isolator plate.

The phrase "de-gassing a coolant" means especially the gas of the coolant is de-gassed but it can also mean that not only the gas but additionally also a small part of the liquid coolant can be de-gassed. The same interpretation applies for the phrase "directing the coolant from ...".

According to an aspect of the coolant de-gas device the first isolator plate channel has a first isolator plate channel inlet and a first isolator plate channel outlet, wherein the first isolator plate channel inlet is arranged towards the fuel cell stack body and the first isolator plate channel outlet is arranged towards the coolant de-gas fitting, wherein the first isolator plate channel is arranged in an approximate direct line from the first isolator plate channel inlet to the first isolator plate channel outlet, and wherein the first isolator plate channel outlet is connected to the coolant de-gas fitting channel.

The first isolator plate channel is arranged in an approximate direct line. Thus, the gas bubbles of the coolant can go up even when the fuel cell stack is inclined. That is because there are no parts of the first isolator plate channel which point down even when the fuel cell stack is inclined. Therefore, the invention allows for a large inclination operating angle of a fuel cell stack, positive or negative, in any axes.

That the first isolator plate channel outlet is connected to the coolant de-gas fitting channel means that the first isolator plate channel outlet is in fluid communication with the coolant de-gas fitting channel. The first isolator plate channel outlet can also be the coolant de-gas fitting channel inlet.

The term "the first isolator plate channel inlet is arranged towards the fuel cell stack body" means that the first isolator plate channel inlet is on the side of the first isolator plate next to the fuel cell stack body. The term "the first isolator plate channel outlet is arranged towards the coolant de-gas fitting" means that the first isolator plate channel outlet is on the side of the first isolator plate next to the coolant de-gas fitting.

According to a further aspect of the coolant de-gas device, the first isolator plate channel has a tapered section, wherein the cross-sectional area of the first isolator plate channel is largest at the first isolator plate channel inlet. Because of the tapered section the gas bubbles of the coolant can easily be caught. Therefore, a large inclination operating angle of a fuel cell stack is possible.

According to a further aspect of the coolant de-gas device an axis of the coolant de-gas fitting channel is offset in parallel to an axis of the first isolator plate channel inlet. The term "offset in parallel" has the meaning that the axis of the coolant de-gas fitting channel can be shifted with respect to the axis of the first isolator plate channel inlet. That means the first isolator plate channel inlet can be shifted with respect to the coolant de-gas fitting channel where the axis of the first isolator plate channel inlet means the line perpendicular to the plane of the first isolator plate channel inlet and through a point of the opening of the first isolator plate channel inlet.

According to a further aspect of the coolant de-gas device the coolant de-gas fitting is removable from the load plate. This has the advantage that the coolant de-gas fitting can easily be replaced.

According to a further aspect of the coolant de-gas device the load plate has an access bore with an access bore wall, wherein the coolant de-gas fitting is arranged in the access bore. Because of the access bore the coolant can be directed through the load plate. There is no need for a channel for the coolant at the side of the load plate which can easily be damaged.

According to a further aspect of the coolant de-gas device the coolant de-gas fitting has a protruding portion, wherein the load plate has a protruding portion protruding from the access bore wall into the access bore, wherein the protruding portion of the coolant de-gas fitting and the protruding portion of the load plate abut against each other.

Therefore, an external mechanical force acting on the coolant de-gas fitting is transferred to the load plate. Then the force is transferred from the load plate to the first isolator plate. However, the external mechanical force is not applied to the connection between the coolant de-gas fitting and the first isolator plate. Therefore, there is no danger of the connection or the coolant de-gas fitting causing damage to the first isolator plate.

Thus, external mechanical forces acting on the coolant de-gas fitting are limited from being transferred into the first isolator plate. The first isolator plate is therefore not prone to mechanical damage.

The protruding portion of the coolant de-gas fitting can be a flange portion of the coolant de-gas fitting and the protruding portion of the load plate can be a flange portion of the load plate.

According to a further aspect of the coolant de-gas device the coolant de-gas device comprises a retaining ring and a wave spring washer, wherein the access bore wall has a recess and the retaining ring is arranged in the recess, and wherein the wave spring washer is arranged between the retaining ring and the protruding portion of the coolant de-gas fitting.

Because of this arrangement the coolant de-gas fitting is removable. The wave spring washer exerts a force on the protruding portion of the coolant de-gas fitting since the retaining ring is arranged in the recess and cannot move. Thus, the protruding portion of the coolant de-gas fitting and the protruding portion of the load plate abut against each other.

According to a further aspect of the coolant de-gas device the coolant de-gas device comprises two O-rings, the first isolator plate has a recess with a recess wall, the coolant de-gas fitting is partly arranged in the recess, and the two O-rings are arranged between the recess wall and the coolant de-gas fitting. The double O-ring design provides a sufficiently large creepage path to ensure no appreciable loss of electrical isolation. There is only a mechanical contact between the O-rings and the first isolator plate and between the O-rings and the coolant de-gas fitting. There is no direct contact between the coolant de-gas fitting and the first isolator plate. According to a further aspect of the coolant de-gas device the coolant de-gas fitting and the first isolator plate do not directly abut against each other. This has the advantage that the coolant de-gas fitting remains centered in the first isolator plate port at all times including during thermal expansion and contraction of the first isolator plate.

According to a further aspect of the coolant de-gas device, the coolant de-gas device comprises one or more flow control valves, wherein at least one flow control valve is arranged in the first isolator plate channel or the coolant de-gas fitting channel. Therefore, both a continuous and an intermittent flow of the coolant through the coolant de-gas device is possible.

Further, according to the present invention a fuel cell stack is described. The fuel cell stack comprises a coolant de-gas device as described, a fuel cell stack body comprising one or more individual cells, and a bottom device comprising a second isolator plate and an end plate.

The individual cells in the fuel cell stack body can be stacked on top of each other in a vertical direction. The individual cells can be components of fuel cells or electrolyzers based on Proton Exchange Membrane (PEM) technology, Solid Oxide Cell (SOC) technology or other competing technologies.

The fuel cell stack body comprises a cooling circuit which is connected to the first isolator plate channel. That means the cooling circuit is in fluid communication with the first isolator plate channel. Further, the fuel cell stack body is electrically isolated because of the first isolator plate and the second isolator plate.

According to an aspect of the fuel cell stack, the fuel cell stack comprises a cooling circuit comprising a coolant inflow channel, a coolant outflow channel and one or more coolant cross-flow channels for cooling the individual cells, wherein the one or more coolant cross-flowchannels connect the coolant inflow channel with the coolant outflow channel, and wherein the coolant inflow channel or the coolant outflow channel is connected to the first isolator plate channel.

Because of the connection of the cooling circuit with the first isolator plate channel, a de-gassing of the coolant is possible.

Specifically, the fuel cell stack body of the fuel cell stack comprises the cooling circuit.

The phrase "the coolant inflow channel or the coolant outflow channel is connected to the first isolator plate channel" has the meaning that the coolant inflow channel or the coolant outflow channel is in fluid communication with the first isolator plate channel.

According to a further aspect of the fuel cell stack, the fuel cell stack comprises Belleville springs and the coolant de-gas fitting is arranged between the Belleville springs. That means the coolant de-gas fitting can be arranged in the middle between the Belleville springs. Therefore, otherwise unused space between the Belleville springs is used to route the gaseous coolant out of the coolant de-gas device and the fuel cell stack. Further advantages, features and details of the invention will be apparent from the following description, in which embodiments of the invention are described in detail with reference to the drawings. Those drawings show:
- Figure 1: a perspective view of a fuel cell stack,
- Figure 2: a schematic sectional view of the coolant de-gas device shown in Fig. 1,
- Figure 3: a perspective view of the fuel cell stack of Fig. 1 with a partial exploded view of the coolant de-gas device,
- Figure 4: a schematic sectional view along the length direction of the fuel cell stack of Fig. 1 showing coolant direction flow,
- Figure 5: a further schematic sectional view along the length direction of the fuel cell stack of Fig. 1 showing coolant direction flow,
- Figure 6: a schematic sectional view along the width direction of the fuel cell stack of Fig. 1 showing coolant direction flow, and
- Figure 7: a further schematic sectional view along the width direction of the fuel cell stack of Fig. 1 showing coolant direction flow.

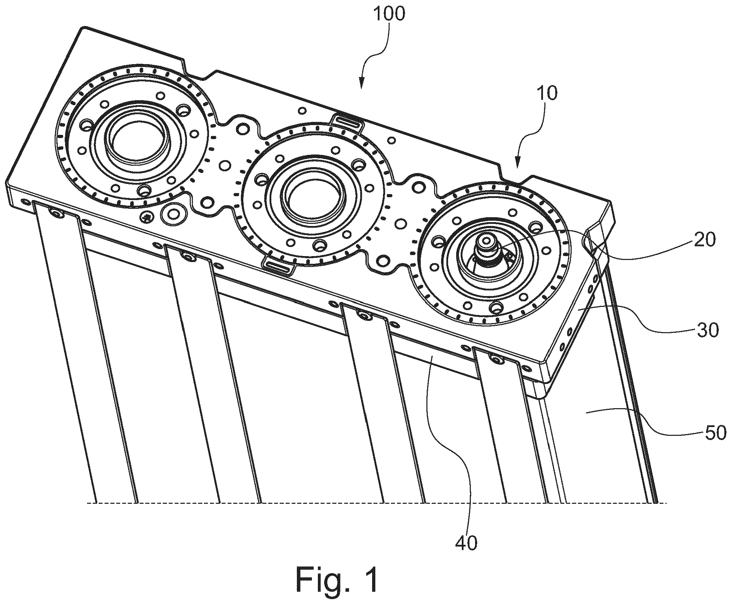

Fig. 1 shows a perspective view of a fuel cell stack 100. Among other components, the fuel cell stack 100 comprises a coolant de-gas device 10 and a fuel cell stack body 50. The fuel cell stack body 50 has one or more individual cells. Further, a first isolator plate 40 and a load plate 30 can be seen in Fig. 1.

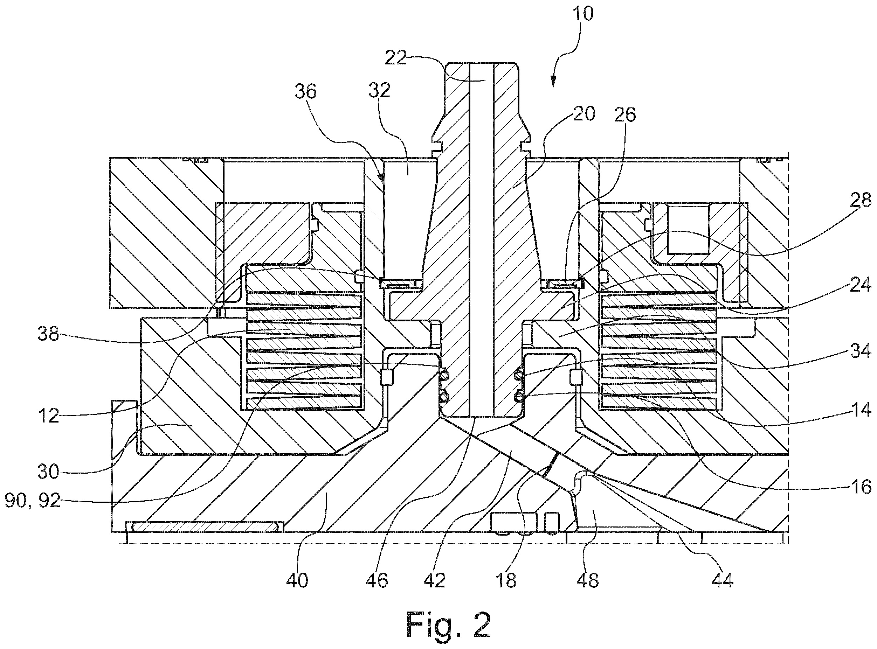

Fig. 2 shows a schematic sectional view of the coolant de-gas device 10 shown in Fig. 1. The coolant de-gas device 10 comprises a coolant de-gas fitting 20, the load plate 30 and the first isolator plate 40. The coolant de-gas fitting 20 has a coolant de-gas fitting channel 22 for de-gassing the coolant. The load plate 30 is used for holding the coolant de-gas fitting 20. Further, the first isolator plate 40 is used for electrically isolating the fuel cell stack body 50 from load plate 30. The first isolator plate 40 and the load plate 30 are mechanically connected to each other. As can be seen in Fig. 2, the first isolator plate 40 comprises a first isolator plate channel 42, wherein the first isolator plate channel 42 is used for directing the coolant from a cooling circuit of the fuel cell stack body 50 to the coolant de-gas fitting channel 22. Therefore, the first isolator plate channel 42 can lead the coolant from the fuel cell stack body 50 to the coolant de-gas fitting channel 22.

Because the load plate 30 holds the coolant de-gas fitting 20 and further the load plate 30 and the first isolator plate 40 are mechanically connected to each other, a force acting on the coolant de-gas fitting 20 is not directly passed onto the first isolator plate 40. Therefore, any external mechanical loads applied to the coolant de-gas fitting 20 do not directly transfer to the fragile first isolator plate 40. As can be seen in Fig. 2, the first isolator plate channel 42 has a first isolator plate channel inlet 44 and a first isolator plate channel outlet 46. The first isolator plate channel inlet 44 is arranged on the side of the first isolator plate 40 which is next to the fuel cell stack body 50 and the first isolator plate channel outlet 46 is arranged on the side of the first isolator plate 40 which is next to the coolant de-gas fitting 20. Further, the first isolator plate channel 42 can be arranged in a direct line from the first isolator plate channel inlet 44 to the first isolator plate channel outlet 46. The first isolator plate channel outlet 46 is in fluid communication to the coolant de-gas fitting channel 22. This allows the coolant to flow through the first isolator plate channel outlet 46 into the coolant de-gas fitting channel 22.

The arrangement of the first isolator plate channel 42 in a direct line leads to a channel which has no parts that trap gas within the coolant even when the fuel cell stack 100 is inclined. Therefore, the gas bubbles of the coolant can always go up to the coolant de-gas fitting channel 22.

The first isolator plate channel 42 can have a tapered section 48. Thus, the cross-sectional area of the first isolator plate channel 42 is largest at the first isolator plate channel inlet 44. Therefore, gas bubbles of the coolant can easily flow into the first isolator plate channel 42 even when the fuel cell stack 100 is inclined.

As can be seen in Fig. 2, the first isolator plate channel outlet 46 is not above the first isolator plate channel inlet 44. There is an offset between the first isolator plate channel outlet 46 and the first isolator plate channel inlet 44.

The load plate 30 has an access bore 32 and the coolant de-gas fitting 20 is arranged in the access bore 32. Furthermore, the coolant de-gas fitting 20 has a protruding portion 24. Also the load plate 30 has a protruding portion 34 protruding from an access bore wall 36 into the access bore 32. As can be seen in Fig. 2, the protruding portion 24 of the coolant de-gas fitting 20 and the protruding portion 34 of the load plate 30 contact each other.

Furthermore, the coolant de-gas device 10 can comprise a retaining ring 26 and a wave spring washer 28. The access bore wall 36 can have a recess 38 and the retaining ring 26 can be arranged in the recess 38. That means the wave spring washer 28 can be arranged between the retaining ring 26 and the protruding portion 24 of the coolant de-gas fitting 20.

Since the retaining ring 26 and the wave spring washer 28 are removable ,the coolant de-gas fitting 20 is also removable from the load plate 30.

A force acting on the coolant de-gas fitting 20 can be transferred to the load plate 30 via the protruding portion 24 of the coolant de-gas fitting 20 and the protruding portion 34 of the load plate 30.

As can be seen in Fig. 2, the coolant de-gas device 10 of the fuel cell stack 100 comprises Belleville springs 12 and the coolant de-gas fitting 20 is arranged between the Belleville springs 12. That means otherwise unused space between the Belleville springs 12 is used for the de-gassing of the coolant.

As can be seen in Fig. 2, the coolant de-gas device 10 comprises a first O-ring 16 and a second O-ring 14. The first isolator plate 40 has a recess 90 with a recess wall 92, wherein the coolant de-gas fitting 20 can be partly inserted in the recess 90. Both O-rings 14, 16 can be arranged between the recess wall 92 and the coolant de-gas fitting 20. Because of the O-rings 14, 16 the coolant de-gas fitting 20 and the first isolator plate 40 do not directly abut against each other. Thus, the two O-rings 14, 16 contribute to the electrical isolation by increasing the creepage path from the energized coolant circuit to the electrically-safe bonded hardware components.

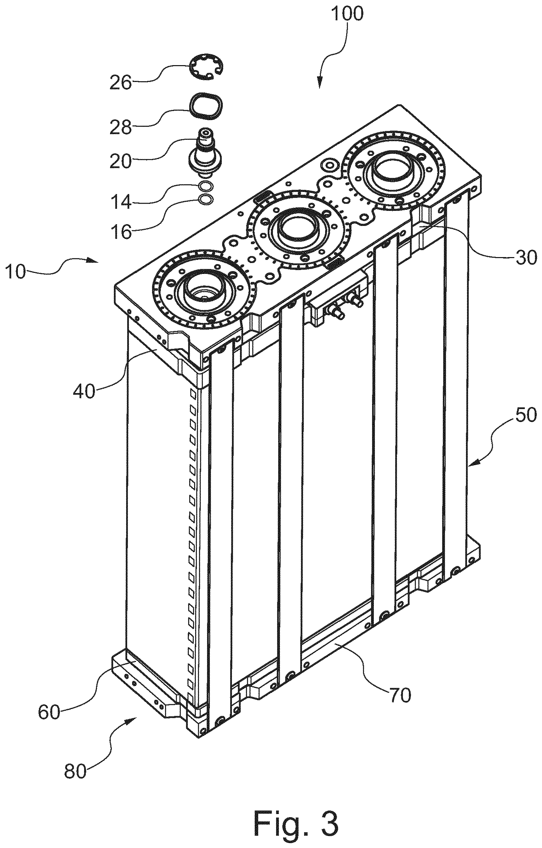

Optionally, the coolant de-gas device 10 can comprise a flow control valve 18. As can be seen in Fig. 2, the flow control valve 18 is arranged in the first isolator plate channel 42. Alternatively, the flow control valve 18 can be arranged in the coolant de-gas fitting channel 22. Fig. 3 shows a perspective view of the fuel cell stack 100 of Fig. 1 with a partial exploded view of the coolant de-gas device 10. Fig. 3 shows the fuel cell stack body 50, the load plate 30 and the first isolator plate 40. The fuel cell stack 100 also comprises a bottom device 80. The bottom device 80 comprises a second isolator plate 60 and an end plate 70. The fuel cell stack body 50 is arranged between the two isolator plates 40, 60.

The retaining ring 26, the wave spring washer 28, the coolant de-gas fitting 20, the first O-ring 16 and the second O-ring 14 of the coolant de-gas device 10 are shown in an exploded view.

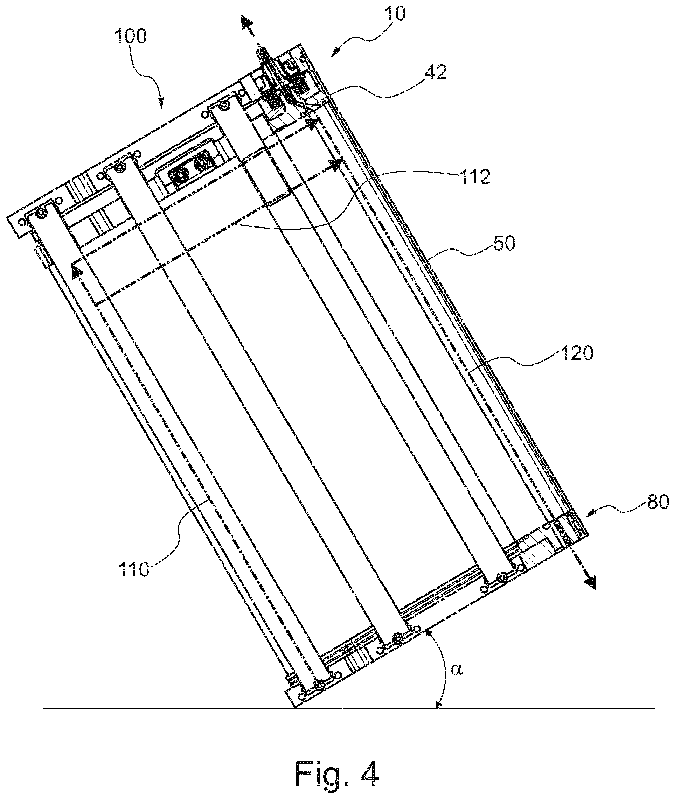

Fig. 4 shows a schematic sectional view along the length direction of the fuel cell stack 100 of Fig. 1. The cooling circuit of the fuel cell stack body 50 is schematically shown with arrows. The cooling circuit comprises a coolant inflow channel 110, a coolant outflow channel 120 and one or more coolant cross-flow channels 112 for cooling the individual cells. The one or more coolant cross-flow channels 112 connect the coolant inflow channel 110 with the coolant outflow channel 120. In Fig. 4 only two of these one or more coolant cross-flow channels 112 are shown. The coolant enters the cooling circuit at the coolant inflow channel 110 at the bottom device 80. The coolant exits the cooling circuit at the coolant outflow channel 120 at the bottom device 80. The gas bubbles entrained in the coolant exit the cooling circuit with the coolant outflow at the coolant outflow channel 120 next to the coolant de-gas device 10. That is because the coolant outflow channel 120 is connected to the first isolator plate channel 42. Additionally, the coolant inflow channel 110 can be connected to the first isolator plate channel 42.

Because of the before described arrangement of the coolant de-gas device 10 it is possible to operate the fuel cell stack 100 at an inclined angle α. In Fig. 4 the fuel cell stack 100 is tilted over the short side to the left. The angle α can be in a wide range, preferably in the range from 0° to 60°, and more preferably in the range from 0° to 45°.

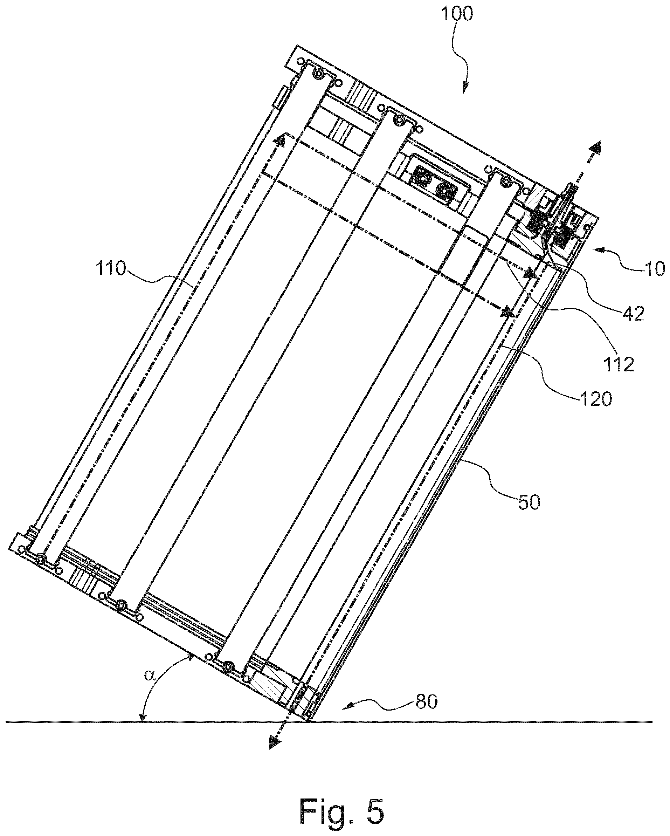

Fig. 5 shows a further schematic sectional view along the length direction of the fuel cell stack 100 of Fig. 1. In Fig. 5 the fuel cell stack 100 is tilted over the short side to the right. The angle α can be in a wide range, preferably in the range from 0° to 60°, and more preferably in the range from 0° to 45°.

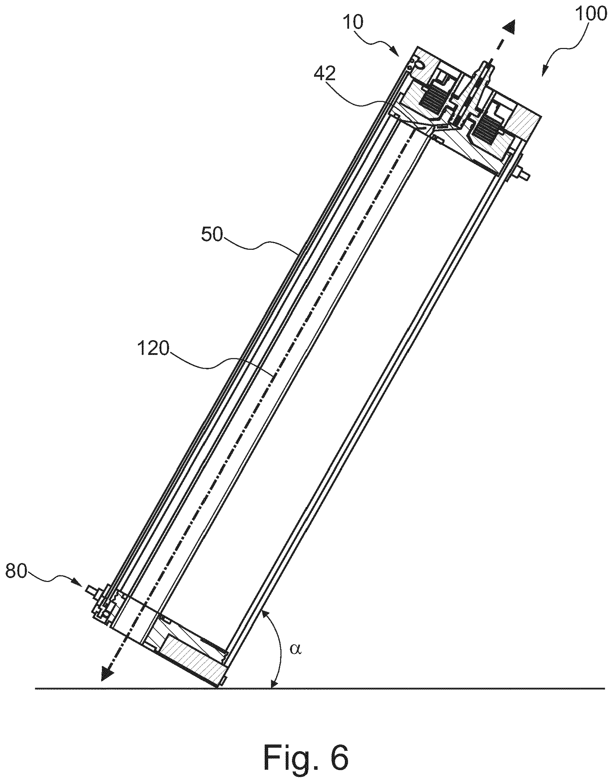

Fig. 6 shows a schematic sectional view along the width direction of the fuel cell stack 100 of Fig. 1. In Fig. 6 the fuel cell stack 100 is tilted over the long side to the right. The angle α can be in a wide range, preferably in the range from 90° to 30°, and more preferably in the range from 90° to 45°.

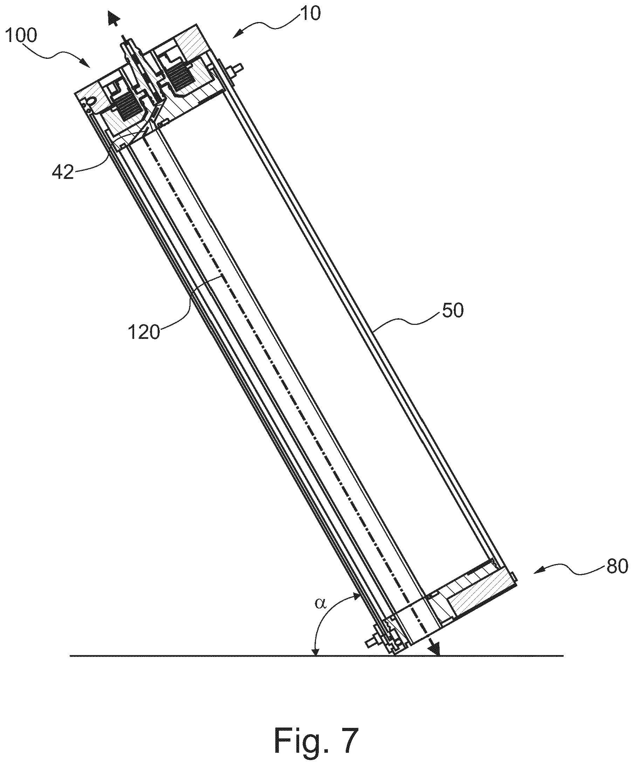

Fig. 7 shows a further schematic sectional view along the width direction of the fuel cell stack 100 of Fig. 1. In Fig. 7 the fuel cell stack 100 is tilted over the long side to the left. The angle α can be in a wide range, preferably in the range from 90° to 30°, and more preferably in the range from 90° to 45°.

The above description of the drawings describes the present invention by way of example only.

### Reference signs

- 10: coolant de-gas device
- 12: Belleville springs
- 14: second O-ring
- 16: first O-ring
- 18: flow control valve
- 20: coolant de-gas fitting
- 22: coolant de-gas fitting channel
- 24: protruding portion of the coolant de-gas fitting
- 26: retaining ring
- 28: wave spring washer
- 30: load plate
- 32: access bore
- 34: protruding portion of the load plate
- 36: access bore wall
- 38: recess of the access bore wall
- 40: first isolator plate
- 42: first isolator plate channel
- 44: first isolator plate channel inlet
- 46: first isolator plate channel outlet and coolant de-gas channel inlet
- 48: tapered section of the first isolator plate channel
- 50: fuel cell stack body
- 60: second isolator plate
- 70: end plate
- 80: bottom device
- 90: recess of the first isolator plate
- 92: recess wall of the first isolator plate
- 100: fuel cell stack
- 110: coolant inflow channel
- 112: coolant cross-flow channel
- 120: coolant outflow channel

## Claims

1. Coolant de-gas device (10) for de-gassing a coolant **characterized by**
a coolant de-gas fitting (20) having a coolant de-gas fitting channel (22) for de-gassing a coolant,
a load plate (30) for holding the coolant de-gas fitting (20), and
a first isolator plate (40) for electrical isolating against a fuel cell stack body (50), wherein the first isolator plate (40) and the load plate (30) are mechanically connected to each other, and wherein the first isolator plate (40) comprises a first isolator plate channel (42) for directing the coolant from a cooling circuit of the fuel cell stack body (50) to the coolant de-gas fitting channel (22).

2. Coolant de-gas device (10) according to claim 1, **characterized in that** the first isolator plate channel (42) has a first isolator plate channel inlet (44) and a first isolator plate channel outlet (46), wherein the first isolator plate channel inlet (44) is arranged towards the fuel cell stack body (50) and the first isolator plate channel outlet (46) is arranged towards the coolant de-gas fitting (20), wherein the first isolator plate channel (42) is arranged in a direct line from the first isolator plate channel inlet (44) to the first isolator plate channel outlet (46), and wherein the first isolator plate channel outlet (46) is connected to the coolant de-gas fitting channel (22).

3. Coolant de-gas device (10) according to claim 1 or 2, **characterized in that** the first isolator plate channel (42) has a tapered section (48), wherein the cross-sectional area of the first isolator plate channel (42) is largest at the first isolator plate channel inlet (44).

4. Coolant de-gas device (10) according to claim 2 or 3, **characterized in that** an axis of the coolant de-gas fitting channel (22) is offset in parallel to an axis of the first isolator plate channel inlet (44).

5. Coolant de-gas device (10) according to any of the preceding claims, **characterized in that** the coolant de-gas fitting (20) is removable from the load plate (30).

6. Coolant de-gas device (10) according to any of the preceding claims, **characterized in that** the load plate (30) has an access bore (32) with an access bore wall (36), wherein the coolant de-gas fitting (20) is arranged in the access bore (32).

7. Coolant de-gas device (10) according to claim 6, **characterized in that** the coolant de-gas fitting (20) has a protruding portion (24), wherein the load plate (30) has a protruding portion (34) protruding from the access bore wall (36) into the access bore (32), wherein the protruding portion (24) of the coolant de-gas fitting (20) and the protruding portion (34) of the load plate (30) abut against each other.

8. Coolant de-gas device (10) according to claim 6 or 7, **characterized in that** the coolant de-gas device (10) comprises a retaining ring (26) and a wave spring washer (28), wherein the access bore wall (36) has a recess (38) and the retaining ring (26) is arranged in the recess (38), and wherein the wave spring washer (28) is arranged between the retaining ring (26) and the protruding portion (24) of the coolant de-gas fitting (20).

9. Coolant de-gas device (10) according to any of the preceding claims, **characterized in that** the coolant de-gas device (10) comprises two O-rings (14, 16), the first isolator plate (40) has a recess (90) with a recess wall (92), the coolant de-gas fitting (20) is partly arranged in the recess (90), and the two O-rings (14, 16) are arranged between the recess wall (92) and the coolant de-gas fitting (20).

10. Coolant de-gas device (10) according to any of the preceding claims, **characterized in that** the coolant de-gas fitting (20) and the first isolator plate (40) do not directly abut against each other.

11. Coolant de-gas device (10) according to any of the preceding claims, **characterized in that** the coolant de-gas device (10) comprises one or more flow control valves (18), wherein at least one flow control valve (18) is arranged in the first isolator plate channel (42) or the coolant de-gas fitting channel (22).

12. Fuel cell stack (100), **characterized by**
a coolant de-gas device (10) according to any of the preceding claims,
a fuel cell stack body (50) comprising one or more individual cells, and
a bottom device (80) comprising a second isolator plate (60) and an end plate (70).

13. Fuel cell stack (100) according to claim 12, **characterized in that** the fuel cell stack (100) comprises a cooling circuit comprising a coolant inflow channel (110), a coolant outflow channel (120) and one or more coolant cross-flow channels (112) for cooling the individual cells, wherein the one or more coolant cross-flow channels (112) connect the coolant inflow channel (110) with the coolant outflow channel (120), and wherein the coolant inflow channel (110) or the coolant outflow channel (120) is connected to the first isolator plate channel (42).

14. Fuel cell stack (100) according to claims 12 and 13, **characterized in that** the fuel cell stack (100) comprises Belleville springs (12) and the coolant de-gas fitting (20) is arranged between the Belleville springs (12).
